# EUROPÄISCHE PATENTSCHRIFT

(11) **EP 3 473 460 B1**
(45) Veröffentlichungstag und Bekanntmachung des Hinweises auf die Patenterteilung: **26.05.2021**
(21) Anmeldenummer: 18194155.0
(22) Anmeldetag: 13.09.2018
(51) Int. Cl.: B60J 7/16, B60H 1/26, B60J 9/02

(54) **DACHLUKENVORRICHTUNG**
ROOF HATCH DEVICE
DISPOSITIF LUCARNE

(30) Priorität: 19.10.2017 DE 102017124410
(43) Veröffentlichungstag der Anmeldung: 24.04.2019
(73) Patentinhaber: MAN Truck & Bus SE, 80995 München (DE)
(72) Erfinder: Temel, Emre, 81241 München (DE); Koch, Christian, 80637 München (DE); Hanöfner, Roman, 80333 München (DE); Hüttner, Stefan, 82110 Germering (DE)
(74) Vertreter: v. Bezold & Partner Patentanwälte - PartG mbB

(56) Entgegenhaltungen:
- EP-A1- 0 648 631
- EP-A2- 0 841 233
- DE-U1- 7 739 310
- DE-U1-202005 009 834
- FR-A1- 2 618 844

## Beschreibung

Die Erfindung betrifft eine Dachlukenvorrichtung für eine Dachöffnung eines Kraftfahrzeugs, einen flexiblen Innenrahmen für eine Kraftfahrzeug-Dachlukenvorrichtung und einen Hauptrahmen für eine Kraftfahrzeug-Dachlukenvorrichtung.

Eine Dachluke ist beispielsweise aus der DE 44 44 038 A1 bekannt, bei welcher ein Deckel der Dachluke von einer Glasscheibe gebildet wird. Unterhalb der Glasscheibe ist ein als Verkleidung wirkender Innendeckel vorgesehen. Der Innendeckel weist eine fensterartige Öffnung auf, die den Deckel für eine Zertrümmerung mittels eines Nothammers zugänglich macht, um eine Notausstiegsfunktion zu realisieren. Die Verkleidung ist dabei fest an dem Glasdeckel befestigt und wird beim Ausstellen des Glasdeckels zu Lüftungszwecken mit diesem mitbewegt.

Aus der US 14 80 274 A ist beispielsweise bekannt, einen zu Lüftungszwecken ausstellbaren Deckel in einem Fahrzeugdach von unten mit einer luftdurchlässigen Verkleidung abzudecken, die fest in nicht lösbarer Weise an der Innenseite des festen Fahrzeugdachs befestigt ist. Bei einer solchen Konstruktion ist jedoch keine leichte Zugänglichkeit des Deckels, beispielsweise zur Realisierung einer Notausstiegsfunktion, gegeben.

Die FR 2 618 844 A1 offenbart ein Schiebedach für Kraftfahrzeuge. Eine bewegliche Platte ist auf einer ihrer Seiten mit einem Scharnier in der Haut eines Fahrgastraums befestigt. Die bewegliche Platte fluchtet im geschlossenen Zustand mit der Haut. Die bewegliche Platte ist mit einem Rahmen und einem Hilfsrahmen an der Haut befestigt, die auf beiden Seiten an einer in der Haut ausgebildeten Öffnung befestigt sind. Die Öffnung umfasst ein Mittel zum Einhängen der beweglichen Platte an der Haut und ein Mittel zum Bedienen der beweglichen Platte.

Die DE 100 25 950 C1 offenbart eine Luke für eine Öffnung in einer festen Fahrzeugdachfläche mit einem in die Dachöffnung einzusetzenden Rahmen, einem von dem Rahmen getragenen öffnungsfähigen Deckel sowie einer Verkleidung, um die Dachöffnung bzw. den Deckel abzudecken. Die Verkleidung ist mittels eines Verbindungsbereichs dachfest angebracht, der so ausgebildet ist, dass die Verkleidung ohne Werkzeug manuell entfernbar ist, um die Dachöffnung bzw. den Deckel freizugeben. Der Rahmen ist zweiteilig ausgebildet und umfasst einen Hauptrahmen sowie einen Innenrahmen, der über einen senkrechten Rand, an welchem in Abstand voneinander befindliche Rast- oder Klemmelemente angebracht sind, die in eine entsprechend ausgebildete Gegenseite des Hauptrahmens eingreifen, in Rast- bzw. Klemmeingriff mit dem Hauptrahmen steht. Durch die Rastverbindung zwischen dem Hauptrahmen und dem Innenrahmen kann der Rahmen auf einfache Weise für unterschiedliche Dachstärken verwendet werden.

Die in der DE 100 25 950 C1 offenbarte Dachluke ist jedoch nur für formstabile starre Rahmenbauteile mit einer hohen Maßhaltigkeit, d. h. geringen Herstellungstoleranzen, verwendbar. Damit sind die in der DE 100 25 950 C1 offenbarten Techniken nicht zum Einsatz bei flexiblen Rahmenbauteilen mit geringer Maßhaltigkeit verwendbar, die heutzutage sehr verbreitet sind. Die Flexibilität und geringe Maßhaltigkeit können sich aus einer instabilen Gesamtform und dem verwendeten Material und Herstellungsverfahren ergeben. Bspw. können Innenverkleidungen von Dachluken als Kunststoff-Tiefziehteile preisgünstig jedoch wenig maßhaltig und formstabil hergestellt werden. Diese flexiblen Innenverkleidungen werden dann üblicherweise einfach an eine Dachinnenseite zum Abdecken eines Hauptrahmens der Dachluke angeschraubt. Die Verschraubung erfolgt im aus dem Fahrgastraum einsehbaren Bereich, sodass die sichtbaren Schraubenköpfe als optisch wenig ansehnlich empfunden werden können. Zusätzlich kann der Innenrahmen nicht nachträglich justiert werden.

Der Erfindung liegt somit die Aufgabe zu Grunde, eine Dachlukenvorrichtung, die einen flexiblen und ggf. wenig maßhaltigen Innenrahmen verwendet, zu verbessern. Insbesondere soll eine Montierbarkeit verbessert werden.

Die Aufgabe wird gelöst durch eine Dachlukenvorrichtung, einen flexiblen Innenrahmen und einen Hauptrahmen gemäß den unabhängigen Ansprüchen. Vorteilhafte Weiterbildungen sind in den abhängigen Ansprüchen und der Beschreibung angegeben.

Die Dachlukenvorrichtung ist für eine Dachöffnung eines Kraftfahrzeugs, insbesondere eines Nutzfahrzeugs, geeignet. Die Dachlukenvorrichtung weist einen Hauptrahmen auf, der in die Dachöffnung einsetzbar ist. Die Dachlukenvorrichtung weist einen Lukendeckel auf, der von dem Hauptrahmen getragen wird. Die Dachlukenvorrichtung weist einen flexiblen (z. B. nicht-formsteifen bzw. formflexiblen und/oder nicht-verwindungssteifen bzw. verwindungsflexiblen) Innenrahmen auf, der über eine Mehrzahl von einstellbaren Schraubverbindungen verstellbar, insbesondere höhenverstellbar, mit dem Hauptrahmen zum Abdecken des Hauptrahmens verbunden ist.

Die Verwendung von einstellbaren Schraubverbindungen zur Höhenverstellbarkeit ermöglicht auf eine montagefreundliche Weise, dass ein flexibler Innenrahmen zum bündigen Abschluss mit einer Dachinnenfläche an dem Hauptrahmen befestigt werden kann. Die Höhenverstellbarkeit ermöglicht hierbei insbesondere die Verwendung eines wenig maßhaltigen Innenrahmens, da Größenunterschiede zwischen den Innenrahmen durch die Höhenverstellbarkeit ausgeglichen werden können. Die Größenunterschiede können dabei aufgrund der Verwendung der Schraubverbindungen sehr genau ausgeglichen werden, da über die Schraubverbindungen eine stetige (d. h. nicht-stufenförmige) Höhenverstellbarkeit geschaffen wird. Durch die Verwendung mehrerer Schraubverbindungen kann ein gleichmäßiges Anliegen des Innenrahmens an der Innendecke gewährleistet werden.

Somit kann die Dachlukenvorrichtung insbesondere einen flexiblen Innenrahmen mit einer geringen Maßhaltigkeit / hohen Herstellungstoleranzen aufweisen. Die Maßhaltigkeit kann eine Flächenformtoleranz von bspw. 3 mm und eine Winkeltoleranz von bspw. 1 mm aufweisen.

In einem Ausführungsbeispiel ist der Innenrahmen aus einem flexiblen (z. B. nicht-formsteifen bzw. formflexiblen und/oder nicht-verwindungssteifen bzw. verwindungsflexiblen) Kunststoff, insbesondere ABS (Acrylnitril-Butadien-Styrol-Copolymere) -Kunststoff oder einem anderen thermoplastischen Polymer, insbesondere Terpolymer, hergestellt. Folglich können die hierin offenbarten Techniken auf vorteilhafte Weise bei den heutzutage verbreiteten flexiblen Kunststoff-Innenrahmen eingesetzt werden.

Es ist auch möglich, dass der Innenrahmen aus Kunststoff, Metall und/oder Holz hergestellt ist und aufgrund seiner Form flexibel ist.

In einer Weiterbildung ist der Innenrahmen mittels eines Kunststoff-Tiefziehverfahrens, insbesondere eines ABS-Tiefziehverfahrens, hergestellt. Derartige Innenrahmen sind zwar preisgünstig herzustellen, jedoch besonders formflexibel, verwindungsflexibel und wenig maßhaltig. Diese Nachteile können durch die hierin offenbarten Techniken auf vorteilhafte Weise überwunden werden.

Alternativ kann der Innenrahmen bspw. mittels eines Kunststoff-Pressverfahrens, insbesondere aus naturfaserverstärktem Kunststoff (NFK), mittels eines Kunststoff-Pressverfahrens, insbesondere aus glasfaserverstärktem Kunststoff (GFK), mittels eines Schäumverfahrens; insbesondere aus Polyurethanschaum (PU), mittels eines Kunststoff-Spritzgussverfahrens oder Spritzpressverfahrens oder mittels eines Metall-Tiefziehverfahrens hergestellt sein.

In einem weiteren Ausführungsbeispiel weist der Innenrahmen eine freibleibende, zentrale Zugangsöffnung zum Lukendeckel auf. Derartig konstruierte Dachlukenvorrichtungen mit flexiblen Innenrahmen können die Flexibilität des Innenrahmens auch nicht durch in die zentrale Zugangsöffnung eingesetzte Verkleidungsbauteile verringern. Die vorliegende Offenbarung schafft auch für derartige Konstruktionen eine Verbesserung hinsichtlich der Montierbarkeit.

In einer Ausführungsform ist der Innenrahmen insbesondere über die Mehrzahl von einstellbaren Schraubverbindung zusätzlich horizontal verstellbar mit dem Hauptrahmen verbunden. Damit kann der Innenrahmen in allen drei Raumrichtungen bei der Montage an den Hauptrahmen verstellt werden, sodass der Innenrahmen trotz Flexibilität und geringer Maßhaltigkeit bündig und zentriert bezüglich des Hauptrahmens montiert werden kann.

In einer weiteren Ausführungsform ist der Innenrahmen innenliegend von dem Hauptrahmen über die Mehrzahl von einstellbaren Schraubverbindungen mit dem Hauptrahmen verbunden. Somit kann der Innenrahmen Bauteile an einer Innenseitenfläche des Hauptrahmens verkleiden.

In einer Ausführungsvariante sind die Mehrzahl von einstellbaren Schraubverbindungen innenliegend zwischen dem Hauptrahmen und dem Innenrahmen vorgesehen. Alternativ oder zusätzlich sind die Mehrzahl von einstellbaren Schraubverbindungen bei geschlossenem Lukendeckel uneinsehbar zwischen dem Hauptrahmen und dem Innenrahmen vorgesehen.

In einer weiteren Ausführungsvariante ist ein Spalt zwischen einem oberen Rand des Innenrahmens und dem Lukendeckel vorgesehen, sodass Schraubenköpfe der Mehrzahl von einstellbaren Schraubverbindungen über den Spalt zum Anziehen und/oder Lösen der Mehrzahl von einstellbaren Schraubverbindungen zugänglich sind. Alternativ oder zusätzlich stehen zumindest einige Schraubenköpfe der Mehrzahl von einstellbaren Schraubverbindungen über einen oberen Rand des Innenrahmens über. Dies hat den Vorteil, dass auch innenliegende, nicht-einsehbare Schraubverbindungen durch den Spalt hindurch bei geschlossenem Lukendeckel angezogen oder gelöst werden können. Im Wartungsfall, falls sich die Notluke nicht elektrisch öffnen lässt, kann der Innenrahmen zerstörungsfrei demontiert/abgeschraubt werden, damit die Notluke bspw. mechanisch über eine Art Kurbel geöffnet werden kann.

Insbesondere kann der Spalt so dimensioniert sein, dass ein Werkzeug zum Anziehen und Lösen von Schraubverbindungen, insbesondere ein Schraubschlüssel, durch den Spalt hindurchpasst.

In einem bevorzugten Ausführungsbeispiel weist die Dachlukenvorrichtung ferner eine Mehrzahl von ersten Befestigungsprofilen (z.B. Befestigungsschienen), die insbesondere an einer Innenumfangsfläche des Hauptrahmens befestigt sind und eine Mehrzahl von zweiten Befestigungsprofilen (z.B. Befestigungsschienen), die insbesondere an einer Außenumfangsfläche des Innenrahmens befestigt sind, auf. Die ersten Befestigungsprofile und die zweiten Befestigungsprofile sind über die Mehrzahl von einstellbaren Schraubverbindungen miteinander verbunden. Dies hat den Vorteil, dass die Befestigungskonstruktion zwischen dem Außenrahmen und dem Innenrahmen und somit uneinsehbar vom Fahrgastraum angeordnet werden kann.

Insbesondere können die ersten Befestigungsprofile und/oder die zweiten Befestigungsprofile als Befestigungsschienen ausgebildet sein.

In einer bevorzugten Ausführungsform weisen die Mehrzahl von ersten Befestigungsprofilen und/oder die Mehrzahl von zweiten Befestigungsprofilen Langlöcher zur Aufnahme von Schrauben der Mehrzahl von einstellbaren Schraubverbindungen auf. Die Langlöcher bieten die Möglichkeit der horizontalen Verstellbarkeit zwischen dem Innenrahmen und dem Außenrahmen.

In einer Weiterbildung sind die ersten Befestigungsprofile zumindest teilweise U-förmig, insbesondere zum Umgeben der zweiten Befestigungsprofile, ausgebildet und weisen Aussparungen für Schaftenden von Schrauben der Mehrzahl von einstellbaren Schraubverbindungen auf. U-förmige Befestigungsprofile können besonders stabil ausgebildet sein. Die Aussparungen ermöglichen, dass die Höhenverstellbarkeit durch das U-Profil nicht eingeschränkt wird und erweitern somit den Bereich der Höhenverstellbarkeit zwischen dem Innenrahmen und dem Außenrahmen.

Es ist auch möglich, dass die ersten Befestigungsprofile zumindest teilweise L-förmig und/oder die zweiten Befestigungsprofile zumindest teilweise L-förmig ausgebildet sind. Die L-förmigen Befestigungsprofile sind einfach herzustellen und zu montieren.

In einer bevorzugten Ausführungsvariante weisen die Mehrzahl von einstellbaren Schraubverbindungen Einnietmuttern, Schweißmuttern und/oder Aufsteckmuttern auf, die vorzugsweise in der Mehrzahl von zweiten Befestigungsprofilen befestigt sind. Derartige Muttern stellen in der Praxis bewährte und genormte Bauteile dar, die für den vorliegenden Anwendungsfall besonders geeignet sind.

In einer weiteren Ausführungsvariante weisen die Mehrzahl von einstellbaren Schraubverbindungen flexible Elemente, insbesondere flexible Unterlegscheiben, vorzugsweise flexible Kunststoff-Unterlegscheiben, auf. Damit kann die Stabilität der Verbindung erhöht und zusätzlich eine etwaige Geräuschentwicklung (z.B. Klappern, Quietschen usw.) vermindert werden.

In weiteren Ausführungsformen kann der Lukendeckel durchsichtig und/oder aus Glass sein, der Lukendeckel öffnungsfähig, insbesondere automatisch öffnungsfähig, sein und/oder der Innenrahmen als Verkleidungsbauteil für den Hauptrahmen vorgesehen sein.

Es ist möglich, dass die ersten Befestigungsprofile mit dem Hauptrahmen verklebt sein können und/oder die zweiten Befestigungsprofile mit dem Innenrahmen verklebt sein können.

Es ist auch möglich, dass der Hauptrahmen und/oder der Innenrahmen im Wesentlichen rechteckförmig ausgebildet ist. Vorzugsweise können die ersten Befestigungsprofile an allen vier Seiten, insbesondere Innenseiten, des rechteckförmigen Hauptrahmens befestigt sein. Alternativ oder zusätzlich können die zweiten Befestigungsprofile an allen vier Seiten, insbesondere Außenseiten, des rechteckförmigen Innenrahmens befestigt sein.

Vorzugsweise kann die Dachlukenvorrichtung zusätzlich als Notausstieg ausgebildet sein und insbesondere einen Nothammer aufweisen, der bspw. an einer Innenfläche des Lukendeckels befestigt sein kann.

Bevorzugt können die Schraubverbindungen, insbesondere Schrauben der Schraubverbindungen, vertikal ausgerichtet sein.

Die Erfindung betrifft auch einen flexiblen (z. B. nicht-formsteifen bzw. formflexiblen und/oder nicht-verwindungssteifen bzw. verwindungsflexiblen) Innenrahmen für eine Kraftfahrzeug-Dachlukenvorrichtung. Die Dachlukenvorrichtung weist einen Hauptrahmen, der in einer Dachöffnung eines Kraftfahrzeugs eingesetzt ist, und einen Lukendeckel, der von dem Hauptrahmen getragen wird, auf. Der flexible Innenrahmen weist eine Mehrzahl von einstellbaren Schraubverbindungen auf, über die der flexible Innenrahmen verstellbar, insbesondere höhenverstellbar, mit dem Hauptrahmen zum Abdecken des Hauptrahmens verbindbar ist. Der flexible Innenrahmen bietet die gleichen Vorteile wie die hierin offenbarte Dachlukenvorrichtung.

Insbesondere kann der flexible Innenrahmen wie hierin offenbart ausgebildet sein.

Beispielsweise können die ersten Befestigungsprofile an einem Innenumfangsrandbereich oder Umfangsstegbereich zu einer zentralen Öffnung des Hauptrahmens, über die der Lukendeckel zugänglich ist, angeordnet sein.

Zusätzlich betrifft die Erfindung einen Hauptrahmen für eine Kraftfahrzeug-Dachlukenvorrichtung mit einem flexiblen (z. B. nicht-formsteifen bzw. formflexiblen und/oder nicht-verwindungssteifen bzw. verwindungsflexiblen) Innenrahmen zum Abdecken des Hauptrahmens, wobei der Hauptrahmen eine Mehrzahl von einstellbaren Schraubverbindungen aufweist, über die der flexible Innenrahmen verstellbar, insbesondere höhenverstellbar, mit dem Hauptrahmen zum Abdecken des Hauptrahmens verbindbar ist. Der Hauptrahmen kann in eine Dachöffnung eines Kraftfahrzeugs einsetzbar sein und/oder einen Lukendeckel tragen. Der Hauptrahmen bietet die gleichen Vorteile wie die hierin offenbarte Dachlukenvorrichtung.

Insbesondere kann der Hauptrahmen wie hierin offenbart ausgebildet sein.

Gemäß einem weiteren Gesichtspunkt betrifft die Erfindung ein Kraftfahrzeug, insbesondere ein Großraumfahrzeug, vorzugsweise ein Nutzfahrzeug (z. B. Omnibus oder Lastkraftwagen), mit mindestens einer Dachlukenvorrichtung wie hierin offenbart, mindestens einem flexiblen Innenrahmen wie hierin offenbart und/oder mindestens einem Hauptrahmen wie hierin offenbart.

Es ist bspw. auch möglich, die Vorrichtung wie hierin offenbart bei Campingfahrzeugen o. Ä. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Ansicht auf einen Dachabschnitt eines Kraftfahrzeugs mit einer Dachöffnung und einer in der Dachöffnung eingebauten Dachlukenvorrichtung;
- Figur 2: eine isometrische Ansicht der Dachlukenvorrichtung, wobei ein Hauptrahmen der Dachlukenvorrichtung und ein Lukendeckel der Dachlukenvorrichtung mit strichpunktierten Linien dargestellt sind;
- Figur 3: eine Schnittansicht entlang der Linie A-A in Figur 1, wobei ein Dachabschnitt, der Hauptrahmen und der Lukendeckel mit strichpunktierten Linien dargestellt sind;
- Figur 4: eine Schnittansicht entlang der Linie B-B in Figur 1, wobei der Hauptrahmen und der Lukendeckel mit strichpunktierten Linien dargestellt sind;
- Figur 5: eine perspektivische Schemazeichnung eines Abschnitts des Hauptrahmens;
- Figur 6: eine perspektivische Schemazeichnung eines weiteren Abschnitts des Hauptrahmens;
- Figur 7: eine perspektivische Schemazeichnung eines Abschnitts eines Innenrahmens der Dachlukenvorrichtung;
- Figur 8: eine perspektivische Schemazeichnung eines weiteren Abschnitts des Innenrahmens;
- Figur 9: eine perspektivische Schemazeichnung einer Schraubverbindung der Dachlukenvorrichtung; und
- Figur 10: eine perspektivische Schemazeichnung einer weiteren Schraubverbindung der Dachlukenvorrichtung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

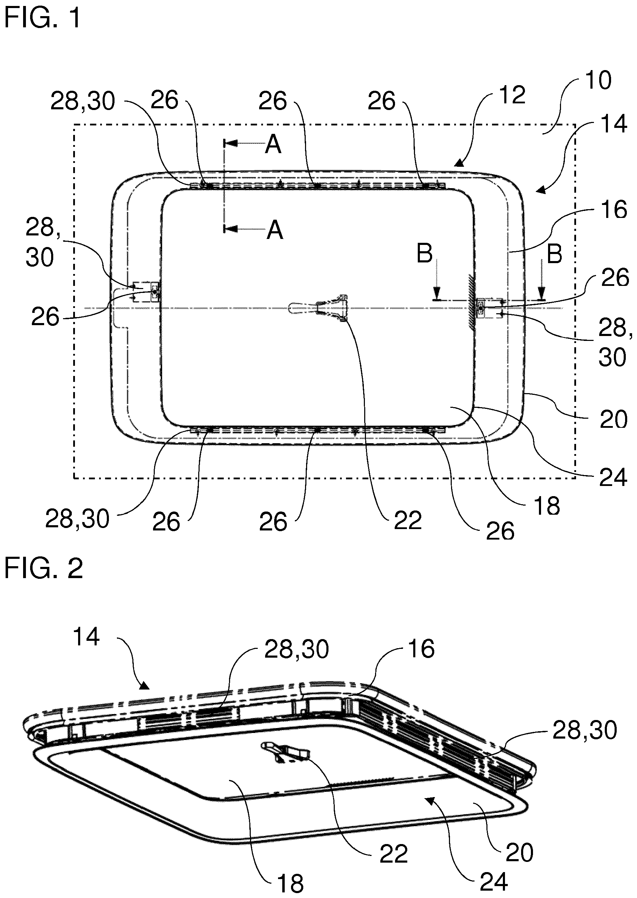

In Figur 1 ist ein Abschnitt eines Daches 10 eines Kraftfahrzeugs dargestellt. Das Kraftfahrzeug kann insbesondere ein Nutzfahrzeug, wie beispielsweise ein Omnibus oder ein Lastkraftwagen, sein. Es ist allerdings auch möglich, dass das Kraftfahrzeug beispielsweise ein Wohnmobil ist.

Das Dach 10 weist mindestens eine Dachöffnung 12 auf, in der eine Dachlukenvorrichtung 14 eingebaut ist. Je nach Konfiguration des Kraftfahrzeugs kann das Dach 10 eine Mehrzahl von Dachöffnungen 12 mit Dachlukenvorrichtungen 14 aufweisen. Beispielsweise kann ein Omnibus zwei bis vier Dachlukenvorrichtungen 14 aufweisen, die entlang einer Länge des Daches 10 verteilt angeordnet sind.

In den Figuren 1 und 2 ist dargestellt, dass die Dachlukenvorrichtung 14 einen Hauptrahmen 16, einen Lukendeckel 18 und einen Innenrahmen 20 aufweist. Der Hauptrahmen 16 und der Lukendeckel 18 sind mit strichpunktierten Linien dargestellt. Der Innenrahmen 20 ist mit durchgezogenen Linien dargestellt.

Der Hauptrahmen 16 ist von oben in die Dachöffnung 12 eingesetzt und abdichtend mit dem Dach 10 verbunden. Der Hauptrahmen 16 trägt den Lukendeckel 18. Zusätzlich trägt der Hauptrahmen 16 eine Betätigungsvorrichtung (nicht dargestellt) zum Öffnen und Schließen des Lukendeckels 18. Der Lukendeckel 18 kann beispielsweise manuell und/oder automatisch zum Belüften des Kraftfahrzeugs geöffnet werden. Der Lukendeckel 18 kann aus einem durchsichtigen Material, wie beispielsweise Glas, hergestellt sein. Am Lukendeckel 18 kann auf einer Innenseite ein Nothammer 22 befestigt sein. Mittels des Nothammers 22 kann in einem Notfall der Lukendeckel 18 zerschlagen und somit ein Fluchtweg über das Dach 10 des Kraftfahrzeugs ermöglicht werden. Damit kann die Dachlukenvorrichtung 14 auch als ein Notausstieg aus dem Kraftfahrzeug dienen.

Der Innenrahmen 20 dient zum Abdecken des Hauptrahmens 16 im Fahrzeuginnenraum, sodass beispielsweise die am Hauptrahmen 16 befestigte Betätigungsvorrichtung für den Lukendeckel 18 vom Fahrzeuginnenraum her nicht sichtbar ist. Zusätzlich deckt der Innenrahmen 20 auch den Randbereich der Dachöffnung 12 von einer Dachinnenseite her ab. Der Innenrahmen 20 ist somit insbesondere als Verkleidungsteil ausgebildet.

Der Innenrahmen 20 wird von dem Hauptrahmen 16 getragen. Der Innenrahmen 20 weist ferner eine freibleibende zentrale Zugangsöffnung 24 zum Lukendeckel 18 auf.

Der Innenrahmen 20 ist aus einem flexiblen Kunststoff-Material hergestellt. Dies ist aus Kostengründen sinnvoll. Aufgrund seiner Form und seines Materials ist der Innenrahmen 20 insbesondere nicht formsteif und nicht verwindungssteif. Beispielsweise kann der Innenrahmen 20 aus einem flexiblen Kunststoff und vorzugsweise mittels eines Kunststoff-Tiefziehverfahrens hergestellt sein. Z. B. kann der Innenrahmen 20 aus einem ABS-Kunststoff (ABS = Acrylnitril-Butadien-Styrol-Copolymere) oder einem anderen thermoplastischen Polymer, insbesondere Terpolymer, mittels eines Tiefziehverfahrens hergestellt sein. Typischerweise weisen derartig hergestellte Innenrahmen auch eine vergleichsweise geringe Maßhaltigkeit, d. h. vergleichsweise große Herstelltoleranzen, auf. Die Flexibilität und geringe Maßhaltigkeit des Innenrahmens 20 bringt gewisse Schwierigkeiten bei dessen Montage an dem Hauptrahmen 16 mit sich, denen sich die vorliegende Offenbarung unter anderen widmet. Insbesondere ermöglicht die hierin offenbarte Dachlukenvorrichtungen 14 eine höhenverstellbare, horizontal verstellbare und bündige Anbindung des flexiblen Innenrahmens 20 an den Hauptrahmen 16.

Der Innenrahmen 20 ist über eine Mehrzahl von Schraubverbindungen 26 mit dem Hauptrahmen 16 höhenverstellbar verbunden. Insbesondere sind an einer Innenumfangsfläche des Hauptrahmens 16 eine Mehrzahl von (vier in dem gezeigten Ausführungsbeispiel) Befestigungsschienen 28 befestigt. An einer Außenumfangsfläche des Innenrahmens 20 sind eine Mehrzahl von (vier in dem gezeigten Ausführungsbeispiel) Befestigungsschienen 30 befestigt. Die Schraubverbindungen 26 verbinden den Hauptrahmen 16 mit dem Innenrahmen 20 über die Befestigungsschienen 28, 30. Es ist auch möglich andere Befestigungsprofile als die Befestigungsschienen 28, 30 zu verwenden.

In dem gezeigten Ausführungsbeispiel sind die vier Befestigungsschienen 28 an vier Seiten der Innenumfangsfläche des im Wesentlichen rechteckförmigen Hauptrahmens 16 befestigt. Die vier Befestigungsschienen 30 sind an vier Seiten der Außenumfangsfläche des im Wesentlichen rechteckförmigen Innenrahmens 20 befestigt. Die Befestigungsschienen 28, 30 bilden jeweils Paare von gegenüberliegend angeordneten Befestigungsschienen.

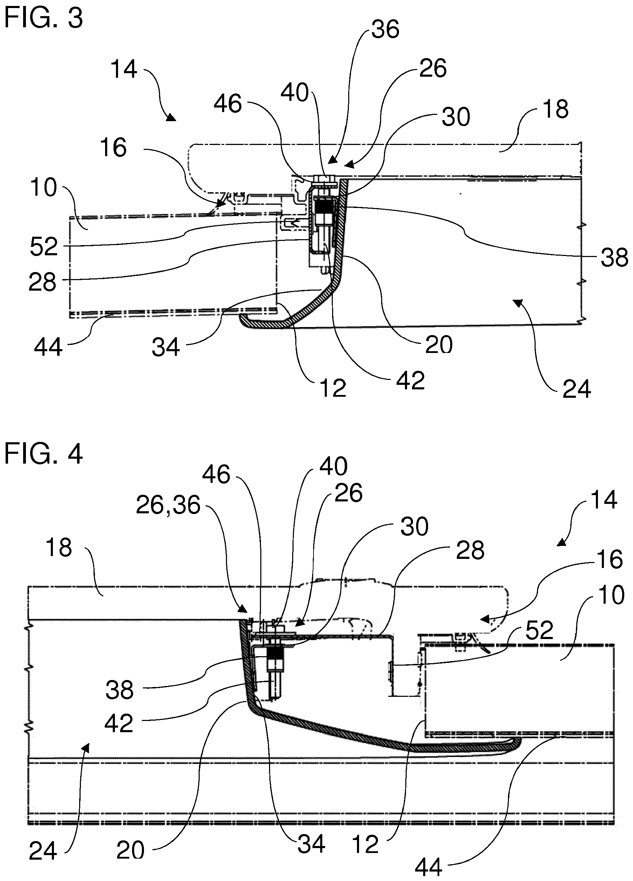

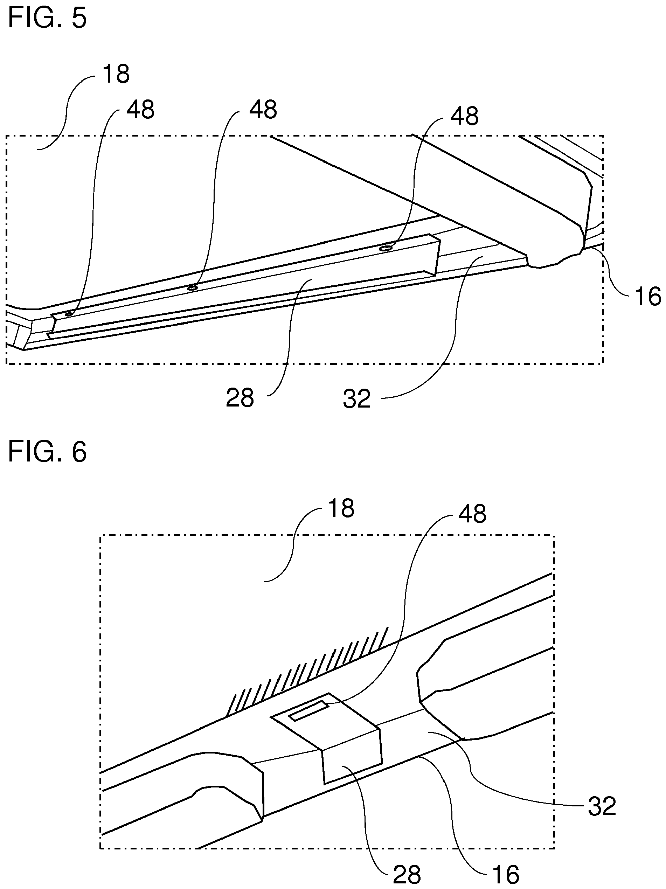

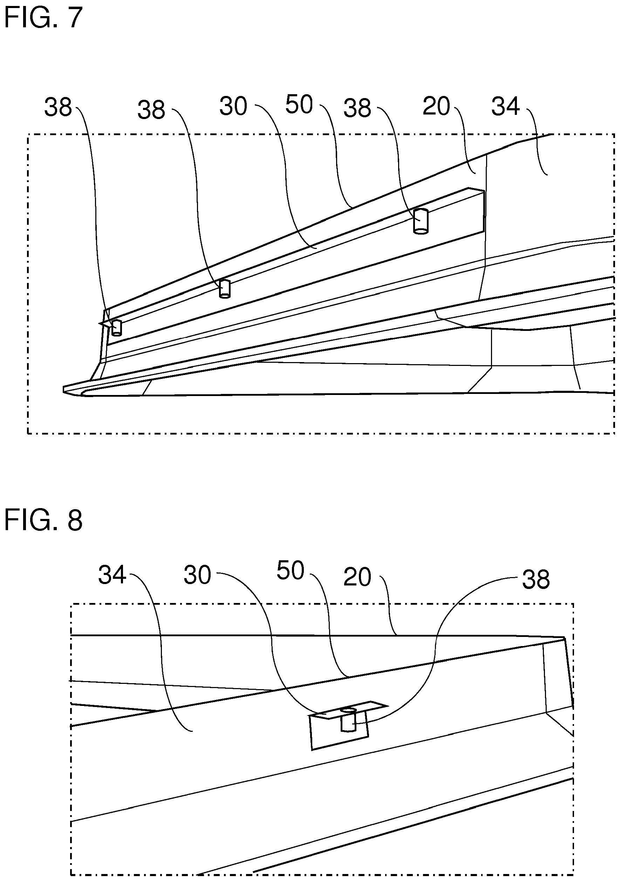

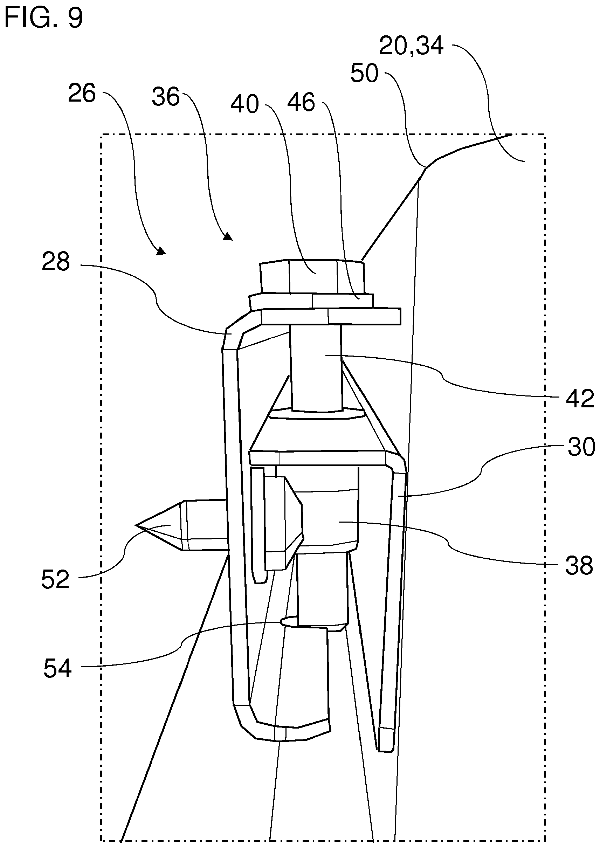

In den Figuren 3, 5, 7 und 9 sind die Befestigungsschienen 28, 30 an den Längsseiten der Dachlukenvorrichtung 14 dargestellt. Im Einzelnen zeigt die Figur 3 einen Längsschnitt entsprechend der Linie A-A in Fig. 1. Die Figur 5 zeigt eine der längsseitigen Befestigungsschienen 28, die an dem Hauptrahmen 16 befestigt ist. Die Figur 7 zeigt eine der Iängsseitigen Befestigungsschienen 30, die an dem Innenrahmen 20 befestigt ist. Die Figur 9 zeigt ein Paar längsseitige Befestigungsschienen 28, 30 mit dem Innenrahmen 20 und ohne den Hauptrahmen 16.

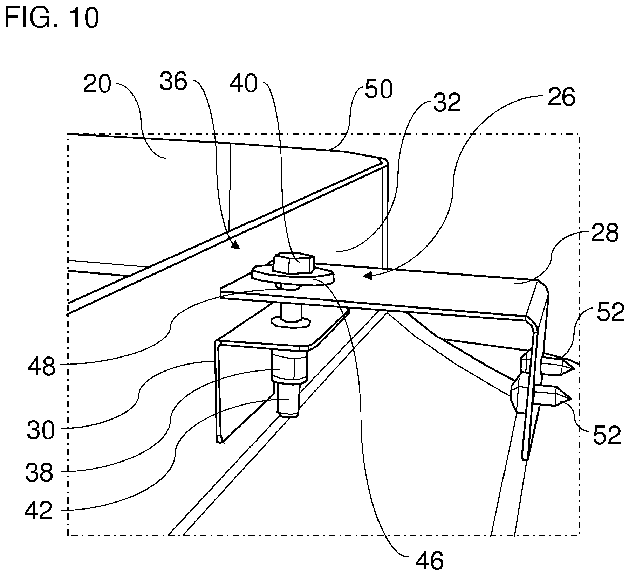

In den Figuren 4, 6, 8 und 10 sind die Befestigungsschienen 28, 30 an den Querseiten der Dachlukenvorrichtung 14 dargestellt. Im Einzelnen zeigt die Figur 4 einen Längsschnitt entsprechend der Linie B-B in Figur 1. Die Figur 6 zeigt eine der querseitigen Befestigungsschienen 28, die an dem Hauptrahmen 16 befestigt ist. Die Figur 8 zeigt eine der querseitigen Befestigungsschienen 30, die an dem Innenrahmen 20 befestigt ist. Die Figur 10 zeigt ein Paar querseitige Befestigungsschienen 28, 30 mit dem Innenrahmen 20 und ohne den Hauptrahmen 16.

Nachfolgend ist unter Bezugnahme auf die Figuren 3 bis 10 die Verbindung zwischen dem Hauptrahmen 16 und dem Innenrahmen 20 mittels der Schraubverbindungen 26 beschrieben.

Die Schraubverbindungen 26 und die Befestigungsschienen 28, 30 sind innenliegend zwischen dem Hauptrahmen 16 und dem Innenrahmen 20 angeordnet. Mit anderen Worten gesagt, die Schraubverbindungen 26 und die Befestigungsschienen 28, 30 sind zwischen einer Innenumfangsfläche 32 des Hauptrahmens 16 und einer Außenumfangsfläche 34 des Innenrahmens 20 angeordnet.

Die Schraubverbindungen 26 weisen Schrauben 36 und Muttern 38 auf. Die Schrauben 36 weisen Schraubenköpfe 40 und Schraubenschäfte 42 auf. Die Schraubenköpfe 40 stützen sich über Unterlegscheiben 46, die beispielsweise aus einem Kunststoff hergestellt sind, an den Befestigungsschienen 28, insbesondere oberen Flächen der Befestigungsschienen 28, ab. Die Unterlegscheiben 46 sind flexibel, um die Stabilität der Verbindung sicherzustellen. Zusätzlich vermindern die flexiblen Kunststoff-Unterlegscheiben 46 eine etwaige Geräuschentwicklung (z.B. Klappern, Quietschen usw.). Die Schraubenschäfte 42 sind in die Muttern 38 eingeschraubt. Die Muttern 38 stützen sich an den Befestigungsschienen 30 ab. Insbesondere können die Muttern 38 als Einnietmuttern ausgebildet und in Öffnungen in den Befestigungsschienen 30 eingenietet sein.

Die Befestigungsschienen 28 und 30 sind voneinander beabstandet. Werden die Schrauben 36 weiter in die Muttern 38 eingeschraubt, so wird ein Abstand zwischen den Befestigungsschienen 28 und 30 in einer Vertikalrichtung verringert. Werden die Schrauben 36 aus den Muttern 38 herausgeschraubt, so vergrößert sich ein Abstand zwischen den Befestigungsschienen 28 und 30 in der Vertikalrichtung. Damit ermöglichen die Schraubverbindungen 26 eine Höhenverstellbarkeit zwischen dem Innenrahmen 20 und dem Hauptrahmen 16.

Zumindest einige Schraubenköpfe 40 können in einem Bereich eines oberen Rands 50 des Innenrahmens 20 beispielsweise überstehend über den oberen Rand 50 angeordnet sein (vgl. insbesondere Figuren 3 und 10). Der obere Rand 50 des Innenrahmens 20 ist beabstandet zu dem Lukendeckel 18 (siehe Figuren 1 und 2) angeordnet, sodass ein Spalt zwischen dem Innenrahmen 20 und dem Lukendeckel 18 besteht. Über diesen Spalt können die Schraubverbindungen 26 beispielsweise mittels eines Schraubenschlüssels bei geschlossenem Lukendeckel 18 angezogen oder gelöst werden. Damit ist die Befestigung und die Funktionalität der Höhenverstellbarkeit aus dem Fahrgastraum nicht einsehbar. Die Höhenverstellbarkeit ermöglicht einen bündigen Abschluss des Innenrahmens 20, insbesondere eines Außenrands des Innenrahmens 20, mit einer Dachinnenfläche 44 des Kraftfahrzeugs auch bei flexiblen und wenig maßhaltigen Innenrahmen.

Die Schraubverbindungen 26 ermöglichen somit die höhenverstellbare Verbindung zwischen dem Hauptrahmen 16 und dem flexiblen Innenrahmen 20, wobei die Schraubverbindungen 26 aus dem Fahrgastraum uneinsehbar zwischen dem Innenrahmen 20 und dem Hauptrahmen 16 angeordnet sind.

In einigen Ausführungsformen können Löcher 48 (siehe Figuren 5, 6 und 10) der Befestigungsschienen 28, durch die die Schrauben 36 der Schraubverbindungen 26 durchgesteckt sind, als Langlöcher ausgebildet sein. Die Langlöcher 48 ermöglichen zusätzlich eine horizontale Verstellbarkeit zwischen dem Innenrahmen 20 und dem Hauptrahmen 16.

Die Höhenverstellbarkeit und die horizontale Verstellbarkeit des flexiblen Innenrahmens 20 zu dem Hauptrahmen 16 ermöglichen eine bündige Montage des Innenrahmens 20, der aufgrund seines Herstellverfahrens eine nur geringe Maßhaltigkeit aufweisen kann.

Die Befestigungsschienen 28 können beispielsweise über Befestigungsmittel 52 und/oder Verklebungen an dem Hauptrahmen 16 befestigt sein. Die Befestigungsschienen 28 können insbesondere an einem Innenumfangsrandbereich / Stegumfangsbereich zu einer zentralen Öffnung des Hauptrahmens 16, über die der Lukendeckel 18 zugänglich ist, angeordnet sein. Die Befestigungsschienen 30 können beispielsweise an den Innenrahmen 20 geklebt sein.

In dem gezeigten Ausführungsbeispiel sind die querseitigen Befestigungsschienen 28 sowie die querseitigen und linksseitigen Befestigungsschienen 30 L-förmig ausgebildet. Die linksseitigen Befestigungsschienen 28 sind U-förmig ausgebildet. An einem unteren Schenkel können die längsseitigen Befestigungsschienen 28 Aussparungen 54 (siehe Figur 9) für Schaftenden der Schäfte 42 der Schrauben 36 aufweisen.

### Bezugszeichenliste

- 10: Dach
- 12: Dachöffnung
- 14: Dachlukenvorrichtung
- 16: Hauptrahmen
- 18: Lukendeckel
- 20: Innenrahmen
- 22: Nothammer
- 24: Zugangsöffnung
- 26: Schraubverbindung
- 28: Befestigungsschiene (Befestigungsprofil)
- 30: Befestigungsschiene (Befestigungsprofil)
- 32: Innenumfangsfläche
- 34: Außenumfangsfläche
- 36: Schraube
- 38: Einnietmutter
- 40: Schraubenkopf
- 42: Schraubenschaft
- 44: Dachinnenfläche
- 46: Unterlegscheibe
- 48: Langloch
- 50: Oberer Rand
- 52: Befestigungsmittel
- 54: Aussparung

## Patentansprüche

1. Dachlukenvorrichtung (14) für eine Dachöffnung (12) eines Kraftfahrzeugs, insbesondere eines Nutzfahrzeugs, aufweisend:
einen Hauptrahmen (16), der in die Dachöffnung (12) einsetzbar ist;
einen Lukendeckel (18), der von dem Hauptrahmen (16) getragen wird; und
einen flexiblen Innenrahmen (20), der über eine Mehrzahl von einstellbaren Schraubverbindungen (26) verstellbar, insbesondere höhenverstellbar, mit dem Hauptrahmen (16) zum Abdecken des Hauptrahmens (16) verbunden ist,
**dadurch gekennzeichnet, dass**
ein Spalt zwischen einem oberen Rand (50) des Innenrahmens (20) und dem Lukendeckel (18) vorgesehen ist, sodass Schraubenköpfe (40) der Mehrzahl von einstellbaren Schraubverbindungen (26) über den Spalt zum Anziehen und/oder Lösen der Mehrzahl von einstellbaren Schraubverbindungen (26) zugänglich sind; und/oder
zumindest einige Schraubenköpfe (40) der Mehrzahl von einstellbaren Schraubverbindungen (26) über einen oberen Rand (50) des Innenrahmens (20) überstehen.

2. Dachlukenvorrichtung (14) nach Anspruch 1, wobei:
der Innenrahmen (20) aus Kunststoff, Metall und/oder Holz hergestellt ist.

3. Dachlukenvorrichtung (14) nach Anspruch 1 oder Anspruch 2, wobei:
der Innenrahmen (20) mittels eines Kunststoff-Tiefziehverfahrens, insbesondere eines ABS-Tiefziehverfahrens, hergestellt ist; oder
der Innenrahmen (20) mittels eines Kunststoff-Pressverfahrens, insbesondere aus naturfaserverstärktem Kunststoff (NFK), hergestellt ist; oder
der Innenrahmen (20) mittels eines Kunststoff-Pressverfahrens, insbesondere aus glasfaserverstärktem Kunststoff (GFK), hergestellt ist; oder
der Innenrahmen (20) mittels eines Schäumverfahrens, insbesondere aus Polyurethanschaum (PU), hergestellt ist; oder
der Innenrahmen (20) mittels eines Kunststoff-Spritzgussverfahrens oder Spritzpressverfahrens hergestellt ist; oder
der Innenrahmen (20) mittels eines Metall-Tiefziehverfahrens hergestellt ist.

4. Dachlukenvorrichtung (14) nach einem der vorherigen Ansprüche, wobei:
der Innenrahmen (20) eine freibleibende, zentrale Zugangsöffnung (24) zum Lukendeckel (18) aufweist.

5. Dachlukenvorrichtung (14) nach einem der vorherigen Ansprüche, wobei:
der Innenrahmen (20) über die Mehrzahl von einstellbaren Schraubverbindung zusätzlich horizontal verstellbar mit dem Hauptrahmen (16) verbunden ist.

6. Dachlukenvorrichtung (14) nach einem der vorherigen Ansprüche, wobei:
der Innenrahmen (20) innenliegend von dem Hauptrahmen (16) über die Mehrzahl von einstellbaren Schraubverbindungen (26) mit dem Hauptrahmen (16) verbunden ist.

7. Dachlukenvorrichtung (14) nach einem der vorherigen Ansprüche, wobei:
die Mehrzahl von einstellbaren Schraubverbindungen (26) innenliegend zwischen dem Hauptrahmen (16) und dem Innenrahmen (20) vorgesehen sind; und/oder
die Mehrzahl von einstellbaren Schraubverbindungen (26) bei geschlossenem Lukendeckel (18) uneinsehbar zwischen dem Hauptrahmen (16) und dem Innenrahmen (20) vorgesehen sind.

8. Dachlukenvorrichtung (14) nach einem der vorherigen Ansprüche, ferner aufweisend:
eine Mehrzahl von ersten Befestigungsschienen (28), die an einer Innenumfangsfläche (32) des Hauptrahmens (16) befestigt sind; und
eine Mehrzahl von zweiten Befestigungsschienen (30), die an einer Außenumfangsfläche (34) des Innenrahmens (20) befestigt sind, wobei
die ersten Befestigungsschienen (28) und die zweiten Befestigungsschienen (30) über die Mehrzahl von einstellbaren Schraubverbindungen (26) miteinander verbunden sind.

9. Dachlukenvorrichtung (14) nach Anspruch 8, wobei:
die Mehrzahl von ersten Befestigungsschienen (28) und/oder die Mehrzahl von zweiten Befestigungsschienen (30) Langlöcher (48) zur Aufnahme von Schrauben der Mehrzahl von einstellbaren Schraubverbindungen (26) aufweisen.

10. Dachlukenvorrichtung (14) nach Anspruch 8 oder Anspruch 9, wobei:
die ersten Befestigungsschienen (28) zumindest teilweise U-förmig ausgebildet sind und Aussparungen (54) für Schaftenden von Schrauben (36) der Mehrzahl von einstellbaren Schraubverbindungen (26) aufweist.

11. Dachlukenvorrichtung (14) nach einem der vorherigen Ansprüche, wobei:
die Mehrzahl von einstellbaren Schraubverbindungen (26) Einnietmuttern (38), Schweißmuttern und/oder Aufsteckmuttern aufweisen, die vorzugsweise in der Mehrzahl von zweiten Befestigungsschienen (30) befestigt sind; und/oder
die Mehrzahl von einstellbaren Schraubverbindungen (26) flexible Elemente (46), insbesondere flexible Unterlegscheiben, vorzugsweise flexible Kunststoff-Unterlegscheiben, aufweisen.

12. Kraftfahrzeug, insbesondere Nutzfahrzeug, mit mindestens einer Dachlukenvorrichtung (14) nach einem der Ansprüche 1 bis 11.

## Claims

1. A roof-hatch arrangement (14) for a roof opening (12) of a motor vehicle, in particular of a commercial vehicle, having:
a main frame (16), which can be inserted into the roof opening (12);
a hatch cover (18) which is carried by the main frame (16); and
a flexible inner frame (20), which is connected to the main frame (16), for the purpose of covering the main frame (16), such that it can be adjusted, in particular adjusted in height, via a plurality of adjustable screw connections (26), **characterized in that**
a gap is provided between an upper edge (50) of the inner frame (20) and the hatch cover (18), and therefore screw heads (40) from amongst the plurality of adjustable screw connections (26) are accessible via the gap for the purpose of tightening and/or releasing the plurality of adjustable screw connections (26); and/or
at least some of the screw heads (40) from amongst the plurality of adjustable screw connections (26) project beyond an upper edge (50) of the inner frame (20).

2. The roof-hatch arrangement (14) according to Claim 1, wherein:
the inner frame (20) is produced from plastic, metal and/or wood.

3. The roof-hatch arrangement (14) according to Claim 1 or Claim 2, wherein:
a plastic-thermoforming process, in particular an ABS-thermoforming process, is used to produce the inner frame (20); or
a compression-moulding process is used to produce the inner frame (20) from plastic, in particular from natural-fibre-reinforced plastic (NFRP); or
a compression-moulding process is used to produce the inner frame (20) from plastic, in particular from glass-fibre-reinforced plastic (GFRP); or
a foaming process is used to produce the inner frame (20), in particular from polyurethane foam (PU); or
a plastic-injection-moulding process or transfer-moulding process is used to produce the inner frame (20); or
a metal-deepdrawing process is used to produce the inner frame (20).

4. The roof-hatch arrangement (14) according to one of the preceding claims, wherein:
the inner frame (20) has a free, central access opening (24) to the hatch cover (18).

5. The roof-hatch arrangement (14) according to one of the preceding claims, wherein:
the inner frame (20) is connected to the main frame (16) such that it can additionally be adjusted horizontally via the plurality of adjustable screw connections.

6. The roof-hatch arrangement (14) according to one of the preceding claims, wherein:
it is on the inside of the main frame (16) that the inner frame (20) is connected to the main frame (16) via the plurality of adjustable screw connections (26).

7. The roof-hatch arrangement (14) according to one of the preceding claims, wherein:
the plurality of adjustable screw connections (26) are provided on the inside between the main frame (16) and the inner frame (20); and/or
the plurality of adjustable screw connections (26) are provided between the main frame (16) and the inner frame (20) such that they are concealed when the hatch cover (18) is closed.

8. The roof-hatch arrangement (14) according to one of the preceding claims, also having:
a plurality of first fastening rails (28), which are fastened on an inner circumferential surface (32) of the main frame (16); and
a plurality of second fastening rails (30), which are fastened on an outer circumferential surface (34) of the inner frame (20), wherein
the first fastening rails (28) and the second fastening rails (30) are connected to one another via the plurality of adjustable screw connections (26) .

9. The roof-hatch arrangement (14) according to Claim 8, wherein:
the plurality of first fastening rails (28) and/or the plurality of second fastening rails (30) have slots (48) for accommodating screws from amongst the plurality of adjustable screw connections (26).

10. The roof-hatch arrangement (14) according to Claim 8 or Claim 9, wherein:
the first fastening rails (28) are designed at least to some extent in a U-shaped manner and have cutouts (54) for the ends of the shanks of screws (36) from amongst the plurality of adjustable screw connections (26).

11. The roof-hatch arrangement (14) according to one of the preceding claims, wherein:
the plurality of adjustable screw connections (26) have riveting nuts (38), welding nuts and/or slip-on nuts, which are fastened preferably in the plurality of second fastening rails (30); and/or
the plurality of adjustable screw connections (26) have flexible elements (46), in particular flexible washers, preferably flexible plastic washers.

12. A motor vehicle, in particular a commercial vehicle, having at least one roof-hatch arrangement (14) according to one of Claims 1 to 11.

## Revendications

1. Dispositif lucarne de toit (14) pour une ouverture de toit (12) d'un véhicule automobile, notamment d'un véhicule utilitaire, comprenant :
un cadre principal (16), qui est insérable dans l'ouverture de toit (12) ;
un couvercle de lucarne (18), qui est supporté par le cadre principal (16) ; et
un cadre intérieur flexible (20), qui est relié de manière ajustable, notamment de manière ajustable en hauteur, par l'intermédiaire d'une pluralité de liaisons à vis réglables (26), au cadre principal (16) pour la couverture du cadre principal (16),
**caractérisé en ce que**
une fente est prévue entre le bord supérieur (50) du cadre intérieur (20) et le couvercle de lucarne (18), de telle sorte que des têtes de vis (40) de la pluralité de liaisons à vis réglables (26) soient accessibles par l'intermédiaire de la fente pour serrer et/ou desserrer la pluralité de liaisons à vis réglables (26) ; et/ou
au moins certaines têtes de vis (40) de la pluralité de liaisons à vis réglables (26) dépassent au-dessus d'un bord supérieur (50) du cadre intérieur (20).

2. Dispositif lucarne de toit (14) selon la revendication 1, dans lequel :
le cadre intérieur (20) est fabriqué en matière plastique, en métal et/ou en bois.

3. Dispositif lucarne de toit (14) selon la revendication 1 ou la revendication 2, dans lequel :
le cadre intérieur (20) est fabriqué au moyen d'un procédé d'emboutissage profond de matière plastique, notamment d'un procédé d'emboutissage profond d'ABS ; ou
le cadre intérieur (20) est fabriqué au moyen d'un procédé de compression de matière plastique, notamment à partir d'une matière plastique renforcée par des fibres naturelles (NFK) ; ou
le cadre intérieur (20) est fabriqué au moyen d'un procédé de compression de matière plastique, notamment à partir d'une matière plastique renforcée par des fibres de verre (GFK) ; ou
le cadre intérieur (20) est fabriqué au moyen d'un procédé de moussage, notamment à partir de mousse de polyuréthane (PU) ; ou
le cadre intérieur (20) est fabriqué au moyen d'un procédé de moulage par injection de matière plastique ou d'un procédé de moulage par transfert ; ou
le cadre intérieur (20) est fabriqué au moyen d'un procédé d'emboutissage profond de métal.

4. Dispositif lucarne de toit (14) selon l'une quelconque des revendications précédentes, dans lequel :
le cadre intérieur (20) comprend une ouverture d'accès centrale restant libre (24) vers le couvercle de lucarne (18).

5. Dispositif lucarne de toit (14) selon l'une quelconque des revendications précédentes, dans lequel :
le cadre intérieur (20) est relié au cadre principal (16) de manière en outre ajustable horizontalement par l'intermédiaire de la pluralité de liaisons à vis réglables.

6. Dispositif lucarne de toit (14) selon l'une quelconque des revendications précédentes, dans lequel :
le cadre intérieur (20) est relié au cadre principal (16) à l'intérieur du cadre principal (16) par l'intermédiaire de la pluralité de liaisons à vis réglables (26).

7. Dispositif lucarne de toit (14) selon l'une quelconque des revendications précédentes, dans lequel :
la pluralité de liaisons à vis réglables (26) sont prévues à l'intérieur entre le cadre principal (16) et le cadre intérieur (20) ; et/ou
la pluralité de liaisons à vis réglables (26) sont prévues sous forme non visible entre le cadre principal (16) et le cadre intérieur (20) lorsque le couvercle de lucarne (18) est fermé.

8. Dispositif lucarne de toit (14) selon l'une quelconque des revendications précédentes, comprenant en outre :
une pluralité de premiers rails de fixation (28), qui sont fixés sur une surface de périphérie intérieure (32) du cadre principal (16) ; et
une pluralité de deuxièmes rails de fixation (30), qui sont fixés sur une surface de périphérie extérieure (34) du cadre intérieur (20),
les premiers rails de fixation (28) et les deuxièmes rails de fixation (30) étant reliés les uns aux autres par l'intermédiaire de la pluralité de liaisons à vis réglables (26).

9. Dispositif lucarne de toit (14) selon la revendication 8, dans lequel :
la pluralité de premiers rails de fixation (28) et/ou la pluralité de deuxièmes rails de fixation (30) comprennent des trous allongés (48) pour la réception de vis de la pluralité de liaisons à vis réglables (26) .

10. Dispositif lucarne de toit (14) selon la revendication 8 ou la revendication 9, dans lequel :
les premiers rails de fixation (28) sont au moins partiellement configurés en forme de U et comprennent des évidements (54) pour des extrémités de tige de vis (36) de la pluralité de liaisons à vis réglables (26).

11. Dispositif lucarne de toit (14) selon l'une quelconque des revendications précédentes, dans lequel :
la pluralité de liaisons à vis réglables (26) comprennent des écrous à sertir (38), des écrous à souder et/ou des écrous à enficher, qui sont de préférence fixés dans la pluralité de deuxièmes rails de fixation (30) ; et/ou
la pluralité de liaisons à vis réglables (26) comprennent des éléments flexibles (46), notamment des rondelles flexibles, de préférence des rondelles flexibles en matière plastique.

12. Véhicule automobile, notamment véhicule utilitaire, muni d'au moins un dispositif lucarne de toit (14) selon l'une quelconque des revendications 1 à 11.
